# EUROPÄISCHE PATENTSCHRIFT

(11) **EP 1 813 558 B1**
(45) Veröffentlichungstag und Bekanntmachung des Hinweises auf die Patenterteilung: **10.12.2008**
(21) Anmeldenummer: 06022104.1
(22) Anmeldetag: 21.10.2006
(51) Int. Cl.: B65G 53/46, B65G 53/52

(54) **Zellenradschleuse**
Cellular rotary valve
Vanne à roue cellulaire

(30) Priorität: 25.01.2006 DE 102006003439
(43) Veröffentlichungstag der Anmeldung: 01.08.2007
(73) Patentinhaber: Coperion Waeschle GmbH & Co. KG, 88250 Weingarten (DE)
(72) Erfinder: Zinser, Bruno, 88289 Waldburg (DE); Schöllhorn, Thomas, 88410 Hauerz (DE)
(74) Vertreter: Hofmann, Matthias

(56) Entgegenhaltungen:
- DE-A1- 19 901 967
- GB-A- 1 225 375
- US-A- 2 886 191
- US-A- 6 062 439

## Beschreibung

Die Erfindung betrifft eine Zellenradschleuse nach dem Oberbegriff des Anspruchs 1.

Eine derartige Zellenradschleuse ist aus der DE 199 01 967 A1 bekannt. Insbesondere dann, wenn derartige Zellenräder nur einseitig angetrieben werden, ist der Übergang zwischen den Gehäuse-Seitendeckeln und dem sonstigen Gehäuse ein Bereich, in dem sich Fördergutreste sammeln können, was insbesondere beim Fördern im Rahmen von Lebensmittelanwendungen den Ausgangspunkt für nicht tolerierbare Verunreinigungen bildet.

Es ist daher eine Aufgabe der vorliegenden Erfindung, eine Zellenradschleuse der eingangs genannten Art derart weiterzubilden, dass sie einfacher gereinigt werden kann.

Diese Aufgabe ist erfindungsgemäß gelöst durch eine Zellenradschleuse mit den im Kennzeichnungsteil des Anspruches 1 angegebenen Merkmalen.

Erfindungsgemäß wurde erkannt, dass der Hauptgrund für die Ausbildung kritischer Verunreinigungen der Umstand ist, dass am Übergang vom Gehäuse-Seitendeckel zum sonstigen Gehäuse bei den bekannten Zellenradschleusen für Reinigungsflüssigkeit schlecht zugängliche Bereiche, nämlich Totvolumina bzw. Spalte, vorliegen. Hier können sich bei den Zellenradschleusen-Ausgestaltungen des Standes der Technik Produktreste sammeln, was insbesondere bei Lebensmittel- oder sonstigen Hygieneanwendungen nicht toleriert werden kann. In diesem Zusammenhang sind insbesondere sogenannte Clean In Place (CIP) Anwendungen zu nennen, bei denen die Zellenradschleuse im zusammengebauten Zustand in allen vom Förderprodukt berührten Bereichen sauber werden muss. Auf Grund der gut für Reinigungsflüssigkeit zugänglichen Ausgestaltung der Ringdichtung im Übergangsbereich können alle insbesondere mit Reinigungsflüssigkeit benetzten Oberflächen im Inneren der Zellenradschleuse vollständig abtrocknen, ohne dass Produkt- bzw. Fördergutreste vorhanden sind, auf denen sich insbesondere Keime niederlassen könnten. Unter einem seitenscheibenfreien Zellenrad wird nachfolgend ein Zellenrad verstanden, welches nicht durch Seitenscheiben stirnseitig abgeschlossen ist. Verschleißschutz-Bereiche am Ort der Stirnkanten der Zellenradstege, durch die der Radius einer Zellenrad-Antriebswelle zum Verschleißschutz abschnittsweise vergrößert ist, sind keine Seitenscheiben im Sinne dieser Anmeldung. Das erfindungsgemäße Konzept der Umgestaltung von Übergangsbereichen zur leichteren Reinigung kann bei verschiedenen Typen von Zellenradschleusen zur Anwendung kommen. Zu nennen sind hier insbesondere auch Durchblasschleusen, bei denen als Auslaufschacht ein Durchblas-Ein- und -Austritt zum Einsatz kommt. Die Zellenradschleuse kann natürlich auch bei anderen Anwendungen zur Förderung von Schüttgut herangezogen werden. Das erfindungsgemäße Konzept kann bei Zellenradschleusen mit beliebiger Form der Zellenradstege genutzt werden, insbesondere auch bei kugeligen oder ovalen Innenräumen.

Eine bündig bzw. vorsprungsfrei abschließende Ausgestaltung der Ringdichtung nach Anspruch 2 ermöglicht einen einfachen Reinigungszugang im Übergangsbereich.

Ein alternativ möglicher, gezielter Überstand der Ringdichtung nach Anspruch 3 stellt sicher, dass die Ringdichtung keinen Rücksprung darstellt. Ein derartiger Rücksprung wurde als nachteilig erkannt, da sich in diesen Fällen auf der Ringdichtung Produktreste ansammeln könnten, was vermieden werden muss.

Ein Umfangsbund nach Anspruch 4 gewährleistet eine sichere Positionierung der Ringdichtung, so dass am Ort der Ringdichtung definierte Reinigungsvoraussetzungen gegeben sind.

Eine Gestaltung des Übergangs vom Gehäuse-Seitendeckel zum sonstigen Gehäuse nach Anspruch 5 verhindert, dass dort scharfkantige Übergänge vorliegen. Totvolumina, die für Reinigungsflüssigkeit schlecht zugänglich sind, werden hierdurch vermieden, so dass eine einfache Reinigung gegeben ist.

Ein Wellen-Übergangsbereich nach Anspruch 6 weist entsprechende Vorteile hinsichtlich der Reinigung im Bereich des Übergangs vom Gehäuse-Seitendeckel zur Wellenaufnahme auf.

Eine kantenfreie Wölbung des Mantel-Übergangsbereichs nach Anspruch 7 bzw. des Wellen-Übergangsbereichs nach Anspruch 8 gewährleistet eine besondere gute Reinigungsfreundlichkeit.

Plane Flächenabschnitte nach Anspruch 9 lassen sich vergleichsweise unaufwändig herstellen.

Dies gilt insbesondere für einen Fasenabschnitt nach Anspruch 10.

Eine Ausgestaltung nach Anspruch 11 verringert den gehäuseseitigen Herstellungsaufwand, da der Übergangsbereich lediglich in die Gehäuse-Seitendeckel, nicht aber in andere Komponenten des Gehäuses der Zellenradschleuse eingearbeitet werden muss.

Ausführungsbeispiele einer Zellenradschleuse werden nachfolgend anhand der Zeichnung näher erläutert. In dieser zeigen:
- Fig. 1: eine Seitenansicht einer Zellenradschleuse, hälftig geschnitten in einem axialen Längsschnitt;
- Fig. 2: eine Ausschnittsvergrößerung von Fig. 1 in einem Mantel-Übergangsbereich zwischen einer Innenwand eines Gehäuse-Seitendeckels und einer inneren Mantelwand einer Gehäusebohrung der Zellenradschleuse;
- Fig. 3: eine Ausschnittsvergrößerung von Fig. 1 in einem Wellen-Übergangsbereich zwischen der Innenwand des Gehäuse-Seitendeckels und einer Wellenaufnahme für eine Zellenrad-Antriebswelle;
- Fig. 4: eine zu Fig. 2 ähnliche Ausschnittsvergrößerung einer weiteren Ausführungsform einer Zellenradschleuse; und
- Fig. 5: eine zu Fig. 3 ähnliche Ausschnittsvergrößerung der Ausführungsform nach Fig. 4;
- Fig. 6: eine zu Fig. 1 ähnliche Darstellung einer weiteren Ausführungsform einer Zellenradschleuse;
- Fig. 7: eine zu Fig. 2 ähnliche Ausschnittsvergrößerung von Fig. 6;

- Fig. 8: einen axialen Längsschnitt durch eine weitere Ausführungsform einer Zellenradschleuse; und
- Fig. 9: eine zu Fig. 2 ähnliche Ausschnittsvergrößerung von Fig. 8.

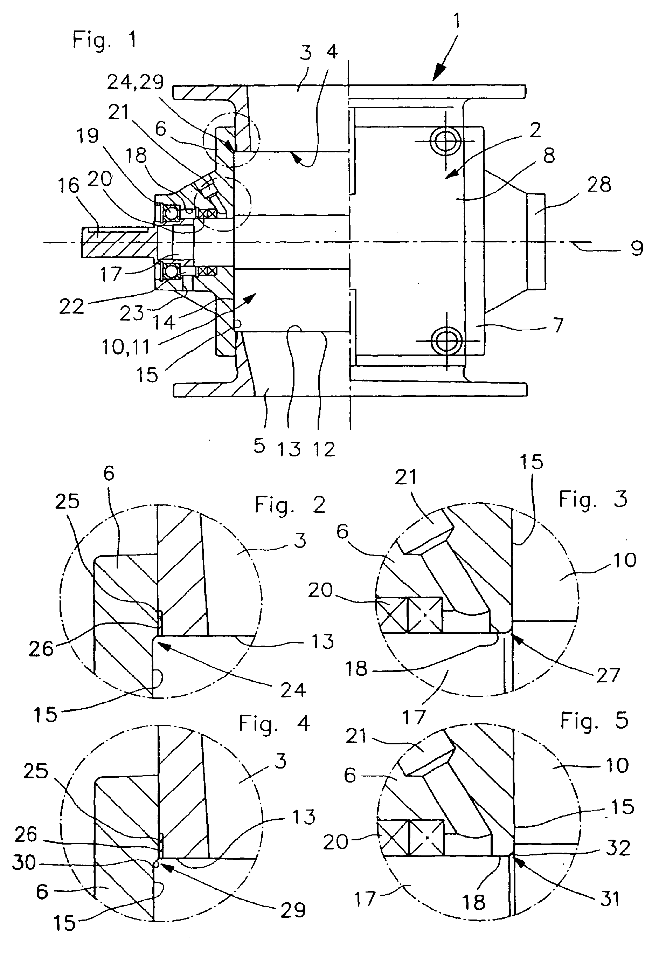

Eine erste Ausführungsform einer insgesamt mit 1 bezeichneten Zellenradschleuse wird nachfolgend anhand der Fig. 1 bis 3 beschrieben. Die Zellenradschleuse 1 hat ein Gehäuse 2, welches in Fig. 1 nach oben begrenzt ist durch einen Zulaufschacht 3, der in eine Zellenradgehäusebohrung 4 einmündet. Nach unten in Fig. 1 ist das Gehäuse 2 begrenzt durch einen Auslaufschacht 5, der aus der Zellenradgehäusebohrung 4 ausmündet. In Fig. 1 zu beiden Seiten hin ist das Gehäuse 2 begrenzt durch Gehäuse-Seitendeckel 6, 7. In Fig. 1 nach vorne und nach hinten ist das Gehäuse 2 begrenzt durch Gehäusewände, von denen in Fig. 1 nur die vordere Zellenradgehäusewand 8 sichtbar ist.

Die Zellenradgehäusebohrung 4 hat die Form eines in Fig. 1 quer liegenden Hohlzylinders mit Zylinderachse 9. Ein Zellenrad 10 ist in der Zellenradgehäusebohrung 4 um eine mit der Zylinderachse 9 zusammenfallende Längsachse drehantreibbar angeordnet. Das Zellenrad 10 ist seitenscheibenfrei. Die durch Zellenradstege 11 voneinander in Umfangsrichtung um die Längsachse 9 voneinander getrennten, sektorförmigen Zellenradkammern werden also seitlich von den Gehäuse-Seitendeckeln 6, 7 begrenzt. Die Gehäuse-Seitendeckel 6, 7 stellen daher stirnseitige Begrenzungen der Zellenradgehäusebohrung 4 dar.

Die Zellenradgehäusebohrung 4 bildet einen Innenraum der Zellenradschleuse, durch den Fördergut vom Zulaufschacht 3 hin zum Auslaufschacht 5 mittels Drehung des Zellenrads 10 gefördert wird.

Das Zellenrad 10 ist komplementär zur Zellenradgehäusebohrung 4 ausgeformt. Umfangswände 12 der Zellenradstege 11 laufen mit definiertem Spiel, je nach Größe des Zellenrads 10 zwischen 0,1 und 0,5 mm, an einer inneren Mantelwand 13 der Zellenradgehäusebohrung 4 vorbei. Ebenfalls mit definiertem Spiel laufen aufgrund der komplementären Form des Zellenrads 10 zur Zellenradgehäusebohrung 4 Stirnwände 14 der Zellenradstege 11 an Innenwänden 15 der Gehäuse-Seitendeckel 6, 7 vorbei.

Das Zellenrad 4 ist drehfest mit einer Zellenrad-Antriebswelle 16 verbunden. Ein Wellenstummel 17 ist in einer Wellenaufnahme 18 über ein Axial/Radiallager 19 gelagert. Zwischen letzterem und der Zellenradgehäusebohrung 4 ist der Wellenstummel 17 gegen den Gehäuse-Seitendeckel 6 über eine Dichtungsanordnung 20 abgedichtet. Zwischen der Dichtungsanordnung 20 und der Innenwand 15 des Gehäuse-Seitendeckels 6 ist in diesem eine Spülleitung 21 ausgeführt, die eine Fluidverbindung zwischen der Zellenradgehäusebohrung 4 und der Umgebung herstellt. Zwischen dem Axial/Radiallager 19 und der Dichtungsanordnung 20 mündet in einen den Wellenstummel 17 umgebenden Ringraum 22 eine Ausfallöffnung 23 ein.

Fig. 2 zeigt eine Ausschnittsvergrößerung der Darstellung nach Fig. 1 am Ort eines Mantel-Übergangsbereichs 24 zwischen der Innenwand 15 des Gehäuse-Seitendeckels 6 und der inneren Mantelwand 13 der Zellenradgehäusebohrung 4. Der Mantel-Übergangsbereich 24 ist konkav abgerundet und kantenfrei ausgeführt. Entsprechend komplementär hierzu gewölbt und kantenfrei ausgeführt sind die hieran vorbeilaufenden Ecken der Zellenradstege 11. Dort, wo der Mantel-Übergangsbereich 24 in die innere Mantelwand 13 übergeht, ist in eine umlaufend im Gehäuse 2 um die Achse 9 verlaufende Umfangsnut 25 ein Flachdichtring 26 eingelegt, der den Gehäuse-Seitendeckel 6 gegen das sonstige Gehäuse 2 abdichtet. Der Flachdichtring 26 ist vom Innenraum der Zellenradschleuse 1 her frei zugänglich. Von der Zellenradschleuse 1 gefördertes Produkt kann daher den Flachdichtring 26 berühren. Auf Grund der freien Zugänglichkeit ist eine einfache Reinigung des Übergangsbereiches zwischen dem Flachdichtring 26 und den Seitendeckeln 6, 7 einerseits und zwischen dem Flachdichtring 26 und der inneren Mantelwand 13 andererseits gewährleistet. Der Flachdichtring 26 schließt mit der inneren Mantelwand 13 bündig ab.

Fig. 3 zeigt eine Ausschnittsvergrößerung von Fig. 1 am Ort eines Wellen-Übergangsbereichs 27 zwischen der Innenwand 15 des Seitendeckels 6 und der Wellenaufnahme 18. Dieser Wellen-Übergangsbereich 27 ist konvex gewölbt und kantenfrei ausgeführt. Entsprechend ist dort das hieran vorbeilaufende Zellenrad 10 bzw. der hieran vorbeilaufende Wellenstummel 17 komplementär konkav gewölbt und kantenfrei ausgeführt.

Mit Ausnahme der Tatsache, dass aus dem Gehäuse-Seitendeckel 7 keine Welle herausgeführt ist, sondern dieser durch einen Deckel 28 abgeschlossen ist, entspricht der innere Aufbau des Seitendeckels 7 dem des vorstehend beschriebenen Seitendeckels 6.

Eine weitere Ausführung einer Zellenradschleuse wird nachfolgend anhand der Fig. 1, 4 und 5 beschrieben. Diese weitere Ausführung unterscheidet sich von der vorstehend Beschriebenen allein durch die Ausgestaltung der Übergangsbereiche.

Ein in Fig. 4 dargestellter Mantel-Übergangsbereich 29 weist insgesamt drei plane Flächenabschnitte auf, die über stumpfe Winkel, bei diesem Ausführungsbeispiel über 135°-Winkel, ineinander übergehen. Bei den drei planen Flächenabschnitten des Mantel-Übergangsbereichs 29 handelt es sich um den diesem Übergangsbereich 29 benachbarten Abschnitt der Innenwand 15, um den diesem Übergangsbereich 29 benachbarten Abschnitt der inneren Mantelwand 13 sowie um einen zwischenliegenden 45°-Fasenabschnitt 30.

Fig. 5 zeigt eine Ausschnittsvergrößerung eines Wellen-Übergangsbereichs 31 dieser weiteren Ausführungsform der Zellenradschleuse 1. Der Wellen-Übergangsbereich 31 weist ebenfalls drei plane Flächenabschnitte auf, die über stumpfe Winkel, im vorliegenden Fall über 135°-Winkel, ineinander übergehen. Bei diesen drei planen Flächenabschnitten handelt es sich um den dem Wellen-Übergangsbereich 31 benachbarten Abschnitt der Wellenaufnahme 18, den diesem Übergangsbereich 31 benachbarten Abschnitt der Innenwand 15 sowie um einen zwischenliegenden 45°-Fasenabschnitt 32.

Auch bei der Ausführung nach den Fig. 4 und 5 sind die an den Übergangsbereichen 29, 31 vorbeilaufenden Abschnitte der Zellenradstege 11, des Zellenrades 10 bzw. des Wellenstummels 17 komplementär zu diesen Übergangsbereichen 29, 31 ausgeformt.

Der Flachdichtring 26 schließt zur Zellenradgehäusebohrung 4 hin bündig mit den angrenzenden Wandabschnitten, also der inneren Mantelwand 13 und der Wölbung des Mantel-Übergangsbereichs 24 ab, so dass hier ein kantenfreier bzw., im Falle des Mantel-Übergangsbereichs 29, stumpfwinkliger Übergang gegeben ist.

Die vorstehend beschriebene Ausgestaltung des Flachdichtrings 26 und der Übergangsbereiche 24, 27, 29 und 31 ermöglicht eine einfache Reinigung dieser kritischen Zonen der Zellenradschleuse 1, in denen sich beim Betrieb Fördergutreste ansammeln können. Insgesamt kann daher die Zellenradschleuse 1 gut gereinigt werden, weshalb sie sich insbesondere für Lebensmittelanwendungen eignet.

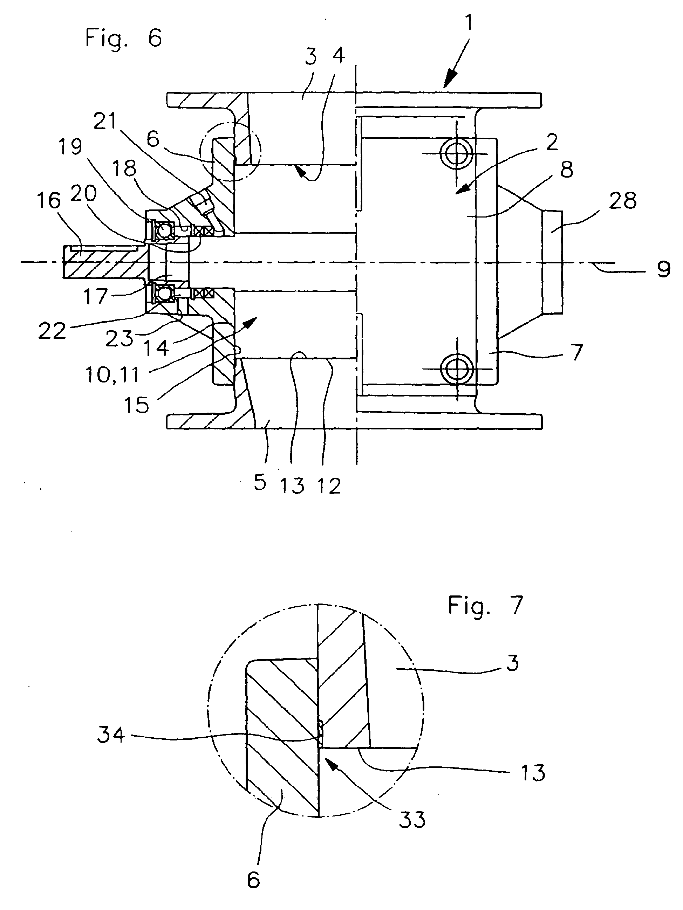

Die Figuren 6 und 7 zeigen eine weitere Ausführungsform einer Zellenradschleuse. Diese unterscheidet sich von den Ausführungen nach den Figuren 1 bis 5 lediglich durch die Ausformung der Übergangsbereiche zwischen der inneren Mantelwand 13 und den Seitendeckeln 6, 7. Bei der Zellenradschleuse 1 nach den Figuren 6 und 7 ist ein derartiger Übergangsbereich 33 rechtwinklig, also weder kantenfrei wie der Übergangsbereich 24 noch stumpfwinklig wie der Übergangsbereich 29, ausgeführt. Auch bei der Ausführung nach den Figuren 6 und 7 liegt jeweils ein Flachdichtring 34 vor, der die Seitendeckel 6, 7 gegen die innere Mantelwand 13 abdichtet. Die Umfangsnut 25 im Gehäuse 2 zur Aufnahme der Flachdichtung 34 ist genauso ausgeführt wie bei den Ausführungen nach den Figuren 2 und 4. Der Flachdichtring 34 ist ebenfalls vom Innenraum der Zellenradschleuse 1 hier frei zugänglich. Der Flachdichtring 34 schließt bündig mit der inneren Mantelwand 13 ab.

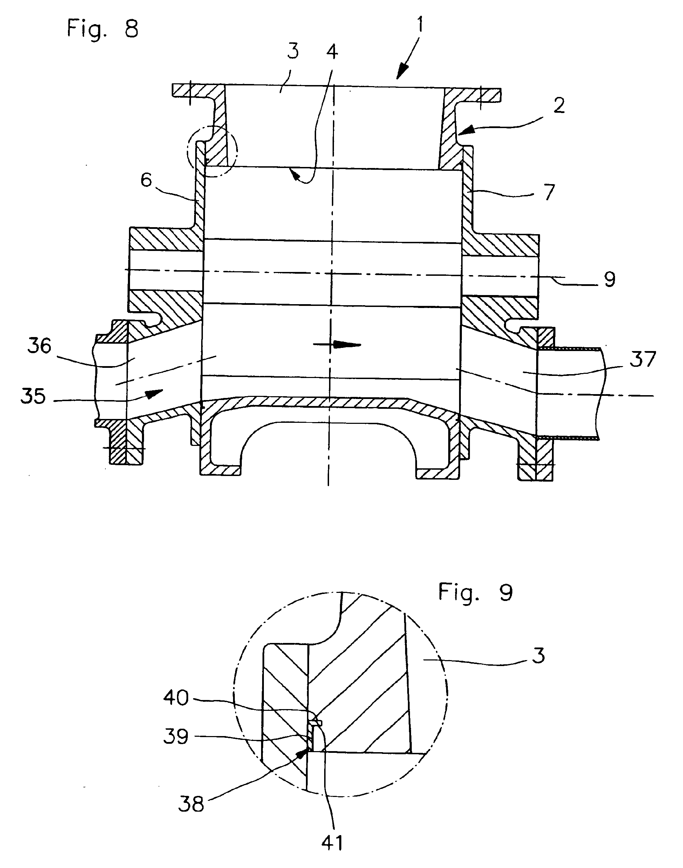

Figuren 8 und 9 zeigen eine weitere Ausführungsform einer Zellenradschleuse. Komponenten, die denjenigen entsprechen, die vorstehend schon unter Bezugnahme auf die Figuren 1 bis 7 erläutert wurden, tragen die gleichen Bezugsziffern und werden nicht nochmals im Einzelnen diskutiert. Die Zellenradschleuse 1 nach den Figuren 8 und 9 unterscheidet sich von derjenigen der Fig. 6 in der Art des Aufbaus des Auslaufschachts, sowie im Aufbau von Seitendeckel gegen die Mantelwand der Zellenradgehäusebohrung abdichtenden Ringdichtungen.

An Stelle eines nach unten wegführenden Auslaufschachtes hat die Zellenradschleuse 1 nach den Figuren 8 und 9 einen Durchblaskanal 35. Letzterer hat einen Durchblas-Eintritt 36, der im in Fig. 8 linken Gehäuse-Seitendeckel 6 aufgeführt ist, und einen Durchblas-Austritt 37, der im in Fig. 8 rechts dargestellten Gehäuse-Seitendeckel 7 ausgeführt ist. Der Durchblas-Austritt 37 stellt den Auslaufschacht der Zellenradschleuse 1 nach den Fig. 8 und 9 dar. Zum Austragen von mit Hilfe der Zellenradschleuse 1 nach den Figuren 8 und 9 gefördertem Produkt wird im mit dem Durchblaskanal 35 kommunizierenden unteren Abschnitt der Zellenradschleuse 1 vorliegendes Produkt von durch den Durchblaskanal 35 strömender Durchblasluft mitgenommen und über den Durchblas-Austritt 37 ausgetragen.

Eine Ringdichtung 38, die bei der Ausführungen nach den Figuren 8 und 9 entsprechend dem Flachdichtring 26 die Seitendeckel 6, 7 gegen die innere Mantelwand 13 der Zellenradgehäusebohrung 4 abdichtet, ist im Detail in der Fig. 9 dargestellt. Eine sich zunächst radial erstreckende Umfangsnut 39 im Gehäuse 2 zur komplementären Aufnahme der Ringdichtung 38 hat einen um 90° in den Gehäusegrundkörper abknickenden, sich koaxial um die Zylinderachse 9 erstreckenden ringförmigen äußeren Sackabschnitt 40. Komplementär zum Sackabschnitt 40 hat die Ringdichtung 38 einen äußeren Umfangsbund 41. In der Einbausituation hindert der hintergreifende Umfangsbund 41 die Ringdichtung 38 an einer Radialverlagerung relativ zur Zylinderachse 9, so dass eine exakte Radialpositionierung der Ringdichtung 38 gegeben ist.

Die Ringdichtung 38 ist vom Innenraum her wie der Flachdichtring 34 der Ausführung in den Figuren 6 und 7 frei zugänglich und schließt wie dieser bündig mit der inneren Mantelwand 13 ab.

Bei einer nicht dargestellten Ausführungsform können die Flachdichtringe 26, 34 oder die Ringdichtung 38 über die angrenzenden Zellenradkomponenten, die sie gegeneinander abdichten, auch überstehen, so dass die freie Zugänglichkeit der Flachdichtringe 26, 34 bzw. der Ringdichtung 38 vom Innenraum her ebenfalls gewährleistet ist.

## Patentansprüche

1. Zellenradschleuse (1)
- mit einem Gehäuse (2),
- mit einem in einer zylindrischen Zellenradgehäusebohrung (4) um eine mit einer Zylinderachse (9) der Zellenradgehäusebohrung (4) zusammenfallende Längsachse drehantreibbar angeordneten, seitenscheibenfreien Zellenrad (10), welches komplementär zur Zellenradgehäusebohrung (4) ausgeformt ist,
- mit einer koaxial zur Zylinderachse (9) verlaufenden Zellenrad-Antriebswelle (16), die drehfest mit dem Zellenrad (10) verbunden ist,
- mit einem in die Zellenradgehäusebohrung (4) einmündenden Zulaufschacht (3),
- mit einem aus der Zellenradgehäusebohrung (4) ausmündenden Auslaufschacht (5; 37),
- wobei die Zellenradgehäusebohrung (4) zur Bildung eines Innenraums in der Zellenradschleuse (1) stirnseitig beiderseits begrenzt ist durch jeweils einen Gehäuse-Seitendeckel (6, 7),
**dadurch gekennzeichnet, dass** am Übergang zwischen Innenwänden (15) der Gehäuse-Seitendeckel (6, 7) und einer inneren Mantelwand (13) der Zellenradgehäusebohrung (4) eine vom Innenraum her frei zugängliche und den jeweiligen Seitendeckel (6, 7) gegen die innere Mantelwand (13) abdichtende Ringdichtung (26; 34; 38) ausgeführt ist.

2. Zellenradschleuse nach Anspruch 1, **dadurch gekennzeichnet, dass** eine dem Innenraum zugewandte Innen-Dichtwand der Ringdichtung (26; 34; 38) bündig mit den angrenzenden Zellenradkomponenten (6, 7, 13) abschließt.

3. Zellenradschleuse nach Anspruch 1, **dadurch gekennzeichnet, dass** eine dem Innenraum zugewandte Innen-Dichtwand der Ringdichtung (26; 34; 38) über die angrenzende Mantelwand (13) übersteht.

4. Zellenradschleuse nach einem der Ansprüche 1 bis 3, **dadurch gekennzeichnet, dass** die Ringdichtung (38) einen äußeren Umfangsbund (41) aufweist, der in einer komplementären Aufnahme (40) im Gehäuse (2) gehalten ist.

5. Zellenradschleuse nach einem der Ansprüche 1 bis 4, **dadurch gekennzeichnet, dass** der Innenraum einen stumpfwinkligen oder kantenfreien Mantel-Übergangsbereich (24; 29) zwischen den Innenwänden (15) der Gehäuse-Seitendeckel (6, 7) und der inneren Mantelwand (13) der Zellenradgehäusebohrung (4) aufweist.

6. Zellenradschleuse nach Anspruch 5, **gekennzeichnet durch** einen stumpfwinkligen oder kantenfreien Wellen-Übergangsbereich (27; 31) zwischen den Innenwänden (15) der Gehäuse-Seitendeckel (6, 7) und einer Wellenaufnahme (18) für die Zellenrad-Antriebswelle (16).

7. Zellenradschleuse nach Anspruch 5 oder 6, **dadurch gekennzeichnet, dass** der Mantel-Übergangsbereich (24) konkav gewölbt und kantenfrei ausgeführt ist.

8. Zellenradschleuse nach Anspruch 6 oder 7, **dadurch gekennzeichnet, dass** an der Wellenaufnahme (18) der Wellen-Übergangsbereich (27) konvex gewölbt und kantenfrei ausgeführt ist.

9. Zellenradschleuse nach Anspruch 5 oder 6, **dadurch gekennzeichnet, dass** der mindestens eine Übergangsbereich (29, 31) plane Flächenabschnitte (15, 30, 13; 18, 32, 15) aufweist, die über stumpfe Winkel ineinander übergehen.

10. Zellenradschleuse nach Anspruch 9, **dadurch gekennzeichnet, dass** ein planer Flächenabschnitt (30; 32) des Übergangsbereichs (29, 31) als 45°-Fasenabschnitt ausgeführt ist.

11. Zellenradschleuse nach einem der Ansprüche 5 bis 10, **dadurch gekennzeichnet, dass** der mindestens eine Übergangsbereich (24, 27; 29, 31) in den Gehäuse-Seitendeckeln (6, 7) ausgeführt ist.

## Claims

1. Cellular wheel feeder (1) comprising
- a housing (2);
- a side-plate-free cellular wheel (10) which is arranged in a cylindrical cellular wheel housing bore (4) so as to be drivable for rotation about a longitudinal axis which coincides with a cylinder axis (9) of the cellular wheel housing bore (4) and which is complementary to the cellular wheel housing bore (4);
- a cellular wheel drive shaft (16) which extends coaxially to the cylinder axis (9) and is connected to the cellular wheel (10) for co-rotation;
- an inlet duct (3) which opens into the cellular wheel housing bore (4);
- an outlet duct (5; 37) leading out of the cellular wheel housing bore (4);
- wherein both sides of the front end of the cellular wheel housing bore (4) are delimited by in each case one housing side shield (6, 7) so as to form an inner chamber in the cellular wheel feeder (1),
**characterised in that** at the transition between inner walls (15) of the housing side shields (6, 7) and an inner surface wall (13) of the cellular wheel housing bore (4), an annular seal (26; 34; 38) is formed which is freely accessible from the inner chamber and seals the respective side shield (6, 7) against the inner surface wall (13).

2. Cellular wheel feeder according to claim 1, **characterised in that** an inner sealing wall of the annular seal (26; 34; 38) facing the inner chamber is in line with the adjacent cellular wheel components (6, 7, 13).

3. Cellular wheel feeder according to claim 1, **characterised in that** an inner sealing wall of the annular seal (26; 34; 38) facing the inner chamber projects beyond the adjacent surface wall (13).

4. Cellular wheel feeder according to one of claims 1 to 3, **characterised in that** the annular seal (38) comprises an outer peripheral collar (41) which is retained in a complementary receptacle (40) in the housing (2).

5. Cellular wheel feeder according to one of claims 1 to 4, **characterised in that** the inner chamber has an obtuse-angled or edge-free surface transition area (24; 29) between the inner walls (15) of the housing side shield (6, 7) and the inner surface wall (13) of the cellular wheel housing bore (4).

6. Cellular wheel feeder according to claim 5, **characterized by** an obtuse-angled or edge-free shaft transition area (27; 31) between the inner walls (15) of the housing side shields (6, 7) and a shaft receptacle (18) for the cellular wheel drive shaft (16).

7. Cellular wheel feeder according to claim 5 or 6, **characterised in that** the surface transition area (24) is concave and edge-free.

8. Cellular wheel feeder according to claim 6 or 7, **characterised in that** near the shaft receptacle (18), the shaft transition area (27) is convex and edge-free.

9. Cellular wheel feeder according to claim 5 or 6, **characterised in that** the at least one transition area (29, 31) comprises plane surface sections (15, 30, 13; 18, 32, 15) which merge into each other, thereby forming obtuse angles.

10. Cellular wheel feeder according to claim 9, **characterised in that** a plane surface section (30; 32) of the transition area (29, 31) is a 45° chamfered section.

11. Cellular wheel feeder according to one of claims 5 to 10, **characterised in that** the at least one transition area (24, 27; 29, 31) is formed in the housing side shields (6, 7).

## Revendications

1. Écluse à roue cellulaire (1) comprenant
- un boîtier (2),
- une roue cellulaire (10), sans vitre latérale, disposée de manière à pouvoir être entraînée en rotation autour d'un axe longitudinal coïncidant avec un axe cylindrique (9) du perçage de boîtier de roue cellulaire (4) dans un perçage de boîtier de roue cellulaire (4) cylindrique, laquelle roue cellulaire est formée de manière complémentaire au perçage de boîtier de roue cellulaire (4),
- un arbre d'entraînement de roue cellulaire (16) s'étendant coaxialement à l'axe cylindrique (9), qui est relié en rotation à la roue cellulaire (10),
- une gaine d'alimentation (3) débouchant dans le perçage de boîtier de roue cellulaire (4),
- une gaine d'évacuation (5 ; 37) sortant du perçage de boîtier de roue cellulaire (4),
- le perçage de boîtier de roue cellulaire (4) étant délimité côté avant de part et d'autre par respectivement un couvercle latéral de boîtier (6, 7) pour former un espace intérieur dans l'écluse à roue cellulaire (1),
**caractérisée en ce qu'**une garniture annulaire (26 ; 34 ; 38) librement accessible depuis l'espace intérieur et rendant étanche le couvercle latéral (6, 7) respectif contre la paroi d'enveloppe (13) intérieure est réalisée sur le passage entre des parois intérieures (15) du couvercle latéral de boîtier (6, 7) et une paroi d'enveloppe (13) intérieure du perçage de boîtier de roue cellulaire (4).

2. Écluse à roue cellulaire selon la revendication 1, **caractérisée en ce qu'**une paroi étanche intérieure tournée vers l'espace intérieur de la garniture annulaire (26 ; 34 ; 38) se termine à fleur des composants de la roue cellulaire (6, 7, 13) contigus.

3. Écluse à roue cellulaire selon la revendication 1, **caractérisée en ce qu'**une paroi étanche intérieure tournée vers l'espace intérieur de la garniture annulaire (26 ; 34 ; 38) dépasse de la paroi d'enveloppe (13) contiguë.

4. Écluse à roue cellulaire selon l'une quelconque des revendications 1 à 3, **caractérisée en ce que** la garniture annulaire (38) présente un collet périphérique (41) extérieur qui est maintenu dans un logement (40) complémentaire dans le boîtier (2).

5. Écluse à roue cellulaire selon l'une quelconque des revendications 1 à 4, **caractérisée en ce que** l'espace intérieur présente une zone de passage d'enveloppe (24 ; 29) sans arêtes ou à angles obtus entre les parois intérieures (15) du couvercle latéral de boîtier (6, 7) et la paroi d'enveloppe (13) intérieure du perçage de boîtier de roue cellulaire (4).

6. Écluse à roue cellulaire selon la revendication 5, **caractérisée par** une zone de passage d'arbre (27 ; 31) sans arêtes ou à angles obtus entre les parois intérieures (15) du couvercle latéral de boîtier (6, 7) et un logement d'arbre (18) pour l'arbre d'entraînement de roue cellulaire (16).

7. Écluse à roue cellulaire selon la revendication 5 ou 6, **caractérisée en ce que** la zone de passage d'enveloppe (24) est réalisée cintrée de manière concave et sans arêtes.

8. Écluse à roue cellulaire selon la revendication 6 ou 7, **caractérisée en ce que** la zone de passage d'arbre (27) est réalisée cintrée de manière convexe et sans arêtes sur le logement d'arbre (18).

9. Écluse à roue cellulaire selon la revendication 5 ou 6, **caractérisée en ce que** l'au moins une zone de passage (29, 31) présente des sections superficielles (15, 30, 13 ; 18, 32, 15) planes qui passent l'une à l'autre par des angles obtus.

10. Écluse à roue cellulaire selon la revendication 9, **caractérisée en ce qu'**une section superficielle (30 ; 32) plane de la zone de passage (29, 31) est réalisée comme une section chanfreinée à 45 °.

11. Écluse à roue cellulaire selon l'une quelconque des revendications 5 à 10, **caractérisée en ce que** l'au moins une zone de passage (24, 27 ; 29, 31) est réalisée dans les couvercles latéraux de boîtier (6, 7).
